# DEMANDE DE BREVET EUROPEEN

(11) **EP 2 738 418 A1**
(43) Date de publication de la demande: **04.06.2014**
(21) Numéro de dépôt: 13360036.1
(22) Date de dépôt: 26.11.2013
(51) Int. Cl.: F16G 3/00, F16G 3/10

(54) **Procédé de fabrication d'une courroie de section circulaire ou similaire fermée en boucle au moyen d'une jonction et courroie obtenue par ledit procédé**

(30) Priorité: 03.12.2012 FR 1261573
(71) Demandeur: Tanals Société par actions simplifiées (SAS), 68290 Masevaux (FR)
(72) Inventeur: Frey, Pierre-Régis, 68460 Lutterbach (FR)
(74) Mandataire: Koelbel, Caroline

(57) **Abrégé**

La présente invention concerne une courroie (10) de section circulaire fermée en boucle par une jonction (20) à visser comportant deux embouts femelles (21, 22) taraudés chacun dans un sens, logés respectivement dans deux évidements centraux ménagés dans les extrémités (2, 3) de ladite courroie (10), et une pièce de liaison (23) pourvue de deux embouts mâles (24, 25) filetés chacun dans un sens, ladite jonction étant agencée pour coupler entre elles les extrémités (2, 3) de ladite courroie (10) par vissage de ladite pièce de liaison (23) dans lesdits embouts femelles (21, 22) sans rotation des extrémités de ladite courroie.

## Description

### Domaine technique :

La présente invention concerne un procédé de fabrication d'une courroie de section circulaire ou similaire fermée en boucle au moyen d'une jonction qui couple entre elles les deux extrémités d'un segment de courroie. Elle concerne également une courroie de section circulaire ou similaire fermée en boucle au moyen d'une jonction obtenue par ledit procédé de fabrication.

### Technique antérieure :

Les courroies concernées par l'invention sont notamment des courroies thermo-soudables réalisées par exemple à partir de polymères thermoplastiques. Elles peuvent présenter une section circulaire ou polygonale. Elles peuvent être creuses ou pleines. Elles peuvent également être armées par une âme textile, métallique ou similaire. Elles peuvent être lisses ou crantées. Elles sont habituellement destinées au convoyage de faibles charges ou à la transmission de faible puissance. Elles sont généralement fabriquées fermées à la dimension ou jonctionnées sur site, par le client lui-même, à la longueur souhaitée par un outillage spécifique permettant d'assembler les extrémités de la courroie par thermosoudure. La publication DE 43 18 781 illustre un outillage à main permettant d'effectuer cette jonction sur site après le montage de la courroie sur une machine. Néanmoins, cette opération de jonctionnement est très délicate à réaliser par le client surtout dans des machines peu accessibles. Sa fiabilité dépend des compétences du client car une mauvaise fusion entraîne une rupture prématurée de la courroie. La jonction réalisée est peu résistante car elle crée une zone de rupture de l'âme de traction. De plus l'outillage est relativement coûteux et ce type de jonction est irréversible. La jonction n'est donc pas démontable et nécessite soit de sectionner la courroie, soit de démonter la machine en cas de maintenance sur ladite machine.

Il existe par ailleurs des connecteurs à téton permettant de jonctionner les extrémités de courroies rondes creuses. Les tétons de ces connecteurs sont introduits en force dans l'alésage central des extrémités correspondantes de la courroie. Toutefois, ce mode d'assemblage n'est pas satisfaisant étant donné qu'il est destiné uniquement aux courroies creuses, sans armature, donc limitées à des efforts de traction faibles. Ce mode d'assemblage nécessite un effort à fournir pour introduire en force le connecteur à l'aide d'une pince. De plus, il est temporaire et n'est pas sécurisé puisque la jonction peut s'ouvrir en cas de traction sur la courroie.

Il existe d'autres types de jonction utilisant une pièce de couplage unique comportant deux embouts mâles opposés et pourvus soit de crans sapins emboités en force, soit de filetages vissés, dans des perçages réalisés dans l'épaisseur des extrémités de la courroie, comme dans les publications US 4,795,410, US 5,964,018 et US 311,883. Or, ce système de couplage est peu résistant et temporaire. La pièce de couplage doit être suffisamment longue pour offrir une certaine résistance à l'arrachage. Mais la longueur de la pièce de couplage pénalise le diamètre d'enroulement et la durée de vie en flexion de la courroie.

D'autres types de jonction existent encore mais elles doivent être réalisées lors de la fabrication proprement dite de la courroie puisque ces jonctions sont montées à l'extrémité des câbles de renfort puis noyés dans la courroie, comme dans les publications US 3,245,276, US 2004/0159760 et WO 2012/155281. Or, ce mode de réalisation n'est possible qu'au stade de la fabrication des courroies et nécessite un outillage lourd, onéreux et complexe à mettre en oeuvre, notamment des moules de fabrication adaptés pour chaque type et chaque longueur de courroie.

### Exposé de l'invention :

La présente invention vise à pallier ces inconvénients en proposant un procédé de fabrication simple, rapide et peu coûteux, qui se situe en aval de la fabrication proprement dite des courroies, qui nécessite un moule de petite taille uniquement adapté à la section des courroies à jonctionner et indépendamment de leur longueur, et qui permet de réaliser une courroie fermée en boucle au moyen d'une jonction amovible, facilitant ainsi le montage et le démontage des courroies sur des machines ou tout autre équipement, cette jonction étant résistante à la traction, sécurisée, fiable et transposable à tout type de courroies étroites de section circulaire, carrée, trapézoïdale ou similaire, sans pénaliser ni le diamètre d'enroulement ni la durée de vie en flexion de la courroie.

Dans ce but, l'invention concerne un procédé de fabrication du genre indiqué en préambule, dans lequel on utilise un segment de courroie à la longueur de la courroie à fabriquer, on ménage dans chacune des deux extrémités dudit segment de courroie respectivement un premier évidement central et un second évidement central, on ouvre axialement les extrémités dudit segment de courroie sur une longueur définie, on place dans ledit premier évidement central un premier embout de couplage et dans ledit second évidement central un second embout de couplage, on lie axialement lesdits embouts de couplage au segment de courroie, on assemble intimement lesdits embouts de couplage auxdites extrémités du segment de courroie, et on effectue une jonction des extrémités dudit segment de courroie pour former ladite courroie fermée en boucle en accouplant ledit premier et ledit second embouts de couplage.

Dans une première forme de réalisation de l'invention, le procédé prévoit que l'on utilise des embouts de couplage prolongés par une âme de liaison. Dans ce cas, lorsqu'on place lesdits embouts de couplage dans les évidements centraux, on positionne ladite âme de liaison dans l'épaisseur dudit segment de courroie et dans le prolongement desdits évidements pour réaliser ladite liaison axiale.

Dans une seconde forme de réalisation de l'invention, le procédé prévoit que l'on dénude au moins une partie d'une âme de renfort dudit segment de courroie. Dans ce cas, lorsqu'on place lesdits embouts de couplage dans les évidements centraux, on fixe les extrémités respectives de ladite âme de renfort du segment de courroie à chacun desdits embouts de couplage pour réaliser ladite liaison axiale.

De manière avantageuse, on assemble par thermosoudure lesdites extrémités dudit segment de courroie pour surmouler lesdits embouts de couplage dans leur évidement respectif pour réaliser ledit assemblage intime.

Préalablement à l'étape d'assemblage intime des embouts de couplage aux extrémités du segment de courroie, on peut assembler les embouts de couplage pour coupler entre elles lesdites extrémités, puis postérieurement à l'étape d'assemblage intime, on peut procéder à une découpe périphérique dudit segment de courroie au droit du plan de jonction desdits embouts de couplage pour ouvrir ladite jonction et séparer lesdites extrémités.

Dans ce but, l'invention concerne également une courroie telle que définie en préambule, comportant, à l'intérieur de chacune de ses deux extrémités, un premier embout de couplage logé dans un premier évidement central et un second embout de couplage logé dans un second évidement central, ledit premier et ledit second embouts de couplage étant agencés pour coupler entre elles lesdites extrémités et fermer ladite courroie en boucle, caractérisée en ce qu'elle est obtenue selon le procédé de fabrication décrit ci-dessus et en ce que les embouts de couplage sont d'une part liés axialement à ladite courroie et d'autre part assemblés intimement aux extrémités de ladite courroie.

Pour garantir ladite liaison axiale, les embouts de couplage peuvent être prolongés par une âme de liaison positionnée dans l'épaisseur de ladite courroie et dans le prolongement desdits évidements centraux, ou ils peuvent être fixés directement à une âme de renfort de ladite courroie. Dans ces deux cas, on favorise le maintien mécanique des embouts de couplage par adhérence à la matière de la courroie et on augmente ainsi leur résistance à l'arrachage ou à la traction et par conséquent la résistance mécanique de la courroie dans la zone de ladite jonction, sans pénaliser ni le diamètre d'enroulement ni la durée de vie en flexion de la courroie.

Dans une première forme de réalisation, ladite jonction peut être à visser et comporte deux embouts femelles taraudés chacun dans un sens et une pièce de liaison pourvue de deux embouts mâles filetés chacun dans un sens, ladite jonction étant agencée pour coupler entre elles les extrémités de ladite courroie par vissage de ladite pièce de liaison dans lesdits embouts femelles, sans rotation des extrémités de la courroie.

Dans une deuxième forme de réalisation, ladite jonction peut être à visser également et comporte un premier embout femelle taraudé et un second embout mâle fileté complémentaire, ladite jonction étant agencée pour coupler entre elles les extrémités de ladite courroie par vissage desdits embouts, en faisant tourner l'une des extrémités par rapport à l'autre.

Dans une troisième forme de réalisation, ladite jonction peut être à clipper et comporte un premier embout femelle pourvu au moins d'une languette élastique et un second embout mâle pourvu au moins d'un cran d'arrêt, ladite jonction étant agencée pour coupler entre elles les extrémités de ladite courroie par emboîtement axial desdits embouts jusqu'à leur verrouillage.

Dans une quatrième forme de réalisation, ladite jonction peut être à baïonnette et comporte un premier embout femelle pourvu au moins d'une rainure en L et un second embout mâle pourvu au moins d'un téton radial, ladite jonction étant agencée pour coupler entre elles les extrémités de ladite courroie par emboîtement axial suivi d'un déplacement angulaire desdits embouts.

Dans une cinquième forme de réalisation, ladite jonction peut être à pivot et comporte un premier embout femelle formant une chape et un second embout mâle pourvu d'un alésage pour recevoir un axe transversal fixé à ladite chape, ladite jonction étant agencée pour coupler entre elles les extrémités de ladite courroie par emboîtement axial desdits embouts et fixation dudit axe transversal.

De préférence, on choisira une jonction réversible permettant d'ouvrir et de fermer de ladite courroie à guise.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels :
- les figures 1A et 1B sont respectivement une vue en perspective et une vue en coupe axiale d'un segment de courroie de section circulaire dont les extrémités sont à coupler par une jonction pour former une courroie fermée en boucle,
- les figures 2A à 2F sont des vues en coupe axiale du segment de courroie de la figure 1 à différentes étapes du procédé de fabrication,
- les figures 3A et 3B sont respectivement une vue en perspective et une vue en coupe axiale d'une jonction à visser comportant deux embouts femelles assemblés par une pièce de liaison pourvue de deux filetages opposés,
- les figures 4A et 4B sont respectivement une vue en perspective et une vue en coupe axiale de la courroie de la figure 1 équipée de la jonction des figures 3A et 3B,
- la figure 5 est une vue en coupe axiale d'une variante de la jonction à visser des figures 3A et 3B,
- la figure 6A est une vue en perspective d'une jonction à clipper et la figure 6B est une vue en coupe axiale de la courroie de la figure 1 équipée de cette jonction à clipper,
- la figure 7A est une vue en perspective d'une jonction à baïonnette et la figure 7B est une vue en coupe axiale de la courroie de la figure 1 équipée de cette jonction à baïonnette,
- la figure 8 est une vue similaire à la figure 2C d'une variante de réalisation de l'invention dans laquelle les embouts de couplage sont liés à l'âme de la courroie, et
- les figures 9A et 9B sont des vues de face et de dessus d'une jonction à pivot.

### Illustrations de l'invention et différentes manières de la réaliser:

En référence aux figures, le procédé de fabrication selon l'invention s'intéresse aux courroies étroites, telles que les courroies à section circulaire comme représentée sur les figures, ou à section polygonale qui peut être carrée, trapézoïdale ou autre. Elles sont fabriquées en continu, découpées à la longueur souhaitée et fermées en boucle par couplage de leurs extrémités.

L'invention porte plus spécialement sur un procédé de jonctionnement réalisé en atelier, postérieurement à la fabrication des courroies proprement dite. Ce procédé de jonctionnement peut donc être séparé de la fabrication des courroies et réalisé par des distributeurs de courroies, par exemple, à partir d'outillage simple et économique, adapté facilement à tout type de courroie indépendamment de sa longueur. Ce procédé a pour but d'équiper les deux extrémités 2, 3 d'un segment de courroie 1 d'une jonction réversible ou amovible, permettant d'ouvrir et de fermer la courroie 10, de manière rapide et simple, sans ou avec un outillage peu coûteux, facilitant ainsi les opérations de mise en place et de remplacement de ce type de courroies sur des machines, équipements, lignes de production, etc. Ainsi le temps d'arrêt machine est réduit au minimum. Ce procédé de jonctionnement simple et efficace est entièrement maîtrisé et contrôlé par le fabricant, le distributeur ou autre, et permet d'offrir une qualité de courroies irréprochable et très fiable. Le client dispose alors d'une courroie ouverte, facile à installer, offrant une résistance mécanique comparable à une courroie fermée, sans pénaliser ni le diamètre d'enroulement ni la durée de vie en flexion de la courroie.

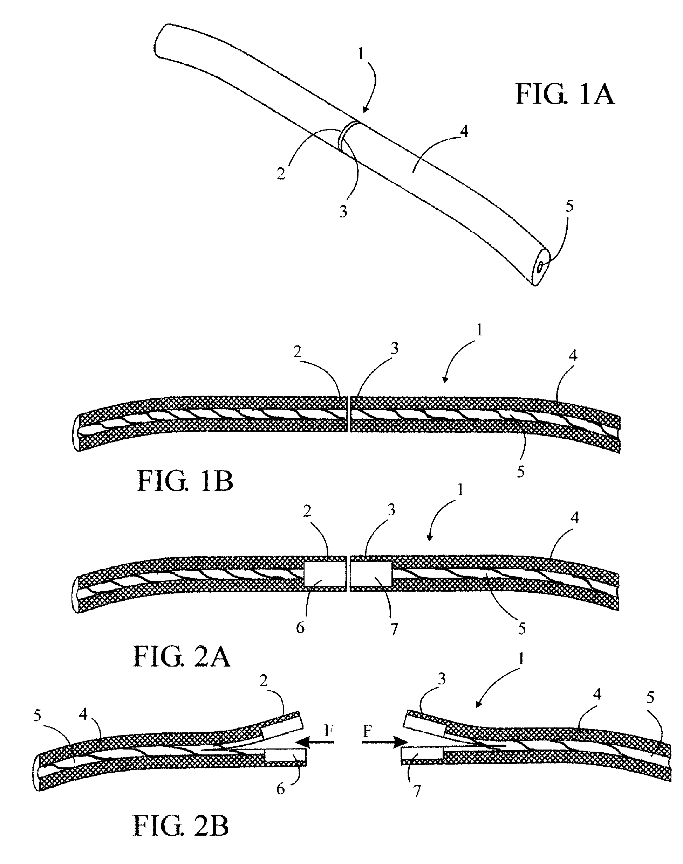

Le segment de courroie 1 représenté sur les figures 1A et 1B comporte un corps 4 cylindrique réalisé dans des matières thermoplastiques donc thermo-soudables, renforcés par une âme de renfort centrale 5 qui peut être une âme textile, synthétique, composite, métallique, en fibres de verre ou autre. Bien entendu, l'invention n'est pas limitée à cette forme de réalisation mais s'applique à toute autre forme de courroie polygonale, pleine ou creuse, crantée ou lisse, avec ou sans armature.

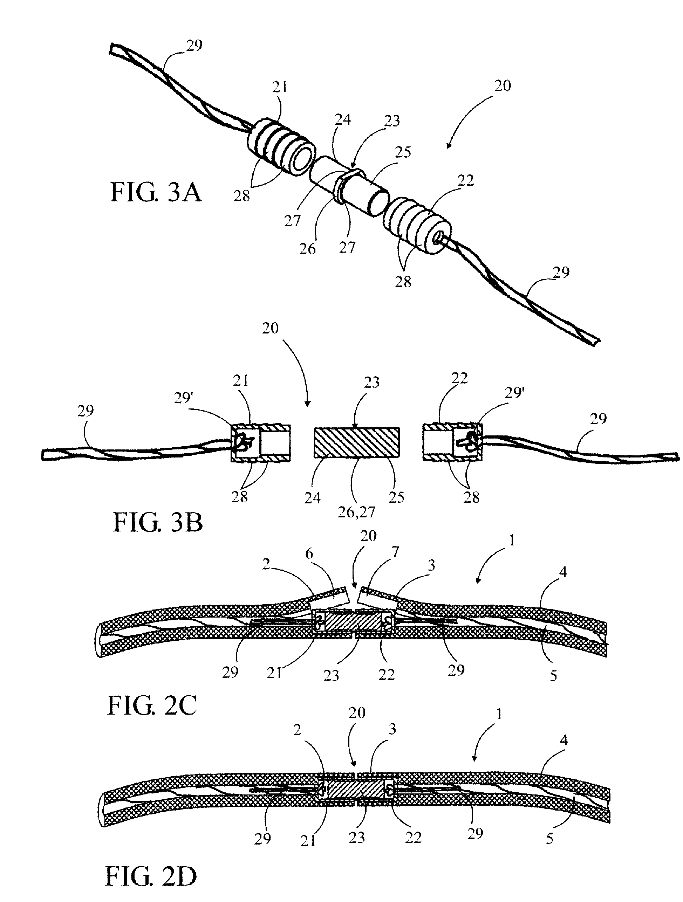

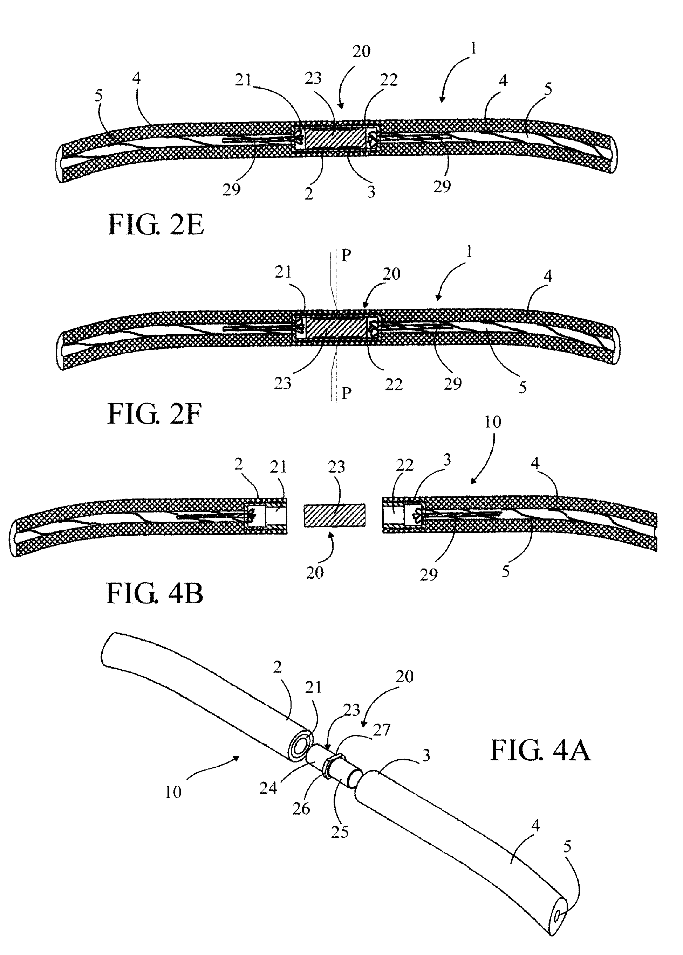

Les figures 2A à 2F illustrent les différentes étapes de fabrication d'une courroie 10 selon les figures 4A et 4B à partir d'un segment de courroie 1 selon les figures 1A et 1B auquel on intègre à ses extrémités 2 et 3 une jonction 20 telle que celle représentée aux figures 3A et 3B. Cette jonction 20 est une jonction réversible à visser et comporte deux embouts de couplage 21, 22 femelles, identiques, pourvus chacun d'un taraudage dont le pas est inversé. Cette jonction 20 comporte en outre une pièce de liaison 23 pourvue de deux embouts de couplage mâles 24, 25 opposés et filetés avec un pas inversé permettant de visser cette pièce de liaison 23 dans les deux embouts femelles 21 et 22, qui vont se rapprocher pour fermer la jonction 20 sans avoir à tourner les extrémités 2 et 3 du segment de courroie 1 l'une par rapport à l'autre. Cette pièce de liaison 23 comporte à cet effet un épaulement 26 pourvu de deux plats 27 lui permettant d'être vissée à l'aide d'une clé de serrage plate étroite. Les embouts femelles 21, 22 sont par ailleurs équipés extérieurement d'anneaux périphériques 28 favorisant l'adhérence avec le corps 4 de la courroie. Ces anneaux périphériques 28 peuvent avoir une section triangulaire formant des crans sapins ou des harpons. Bien entendu, toute autre forme en relief prévue à l'extérieur desdits embouts pour favoriser l'adhérence de la matière thermoplastique sur les embouts est envisageable. Ces embouts femelles 21, 22 sont dans l'exemple représentés prolongés par une âme de liaison 29, formée par exemple d'une âme textile, synthétique, composite, acier, en fibres de verre ou similaire, permettant de lier axialement lesdits embouts 21, 22 au segment de courroie 1. En effet, l'âme de liaison 29 assure le maintien mécanique des embouts 21, 22 à l'intérieur du segment de courroie 1 par adhérence avec la matière du corps 4 du segment de courroie 1. Elle garantit ainsi la résistance à l'arrachage et par conséquent la résistance mécanique à la traction de la courroie 10 dans la zone de ladite jonction 20. De ce fait, cette jonction 20 résiste parfaitement aux flexions et déformations subies lors du passage de la courroie 10 sur des poulies et sa résistance à la fatigue est augmentée On choisira une âme de liaison 29 chimiquement compatible avec la matière dudit corps 4 et/ou on pourra utiliser un primaire d'accrochage et/ou des protubérances sous la forme de noeuds par exemple pour augmenter chimiquement et/ou mécaniquement l'adhérence entre l'âme 29 et le corps 4. Chaque âme de liaison 29 est liée à son embout 21, 22 par exemple au moyen d'un noeud 29', d'un point de soudure, d'un rivet, ou de tout autre moyen équivalent.

Le procédé de fabrication selon l'invention prévoit une première étape, représentée à la figure 2A, dans laquelle on ménage dans chacune des deux extrémités 2, 3 du segment de courroie 1 respectivement un premier évidement central 6 et un second évidement central 7 par enlèvement de matière, notamment par fusion au moyen d'une lame chauffante, par découpe et/ou usinage au moyen d'une meule, d'une fraise, d'un foret ou similaire. La section et la profondeur des évidements 6 et 7 correspondent au moins à la section et à la longueur des embouts 21 et 22 à insérer.

La deuxième étape, représentée à la figure 2B, consiste à ouvrir axialement les extrémités 2, 3 du segment de courroie 1 selon les flèches F sur une longueur définie correspondant au moins à la longueur de l'âme de liaison 29 des embouts 21 et 22.

Bien entendu, ces première et deuxième étapes peuvent être inversées pour ouvrir d'abord axialement les extrémités 2 et 3 du segment de courroie 1 avant de créer les évidements 6 et 7.

Dans la troisième étape représentée à la figure 2C, on positionne la jonction 20 complète, c'est à dire les deux embouts 21 et 22 et la pièce de liaison 23 assemblés, à l'intérieur du segment de courroie 1. On place chaque embout 21, 22 à l'intérieur d'un évidement 6, 7 et l'âme de liaison 29 superposée à ou à l'intérieur de l'âme de renfort centrale 5 du segment de courroie 1 pour lier axialement lesdits embouts 21, 22 au segment de courroie 1. Si le segment de courroie 1 ne comporte pas d'âme de renfort centrale 5, on positionne l'âme de liaison 29 dans une zone médiane dudit segment.

On ferme les extrémités 2 et 3 du segment de courroie 1 sur cette jonction 20 conformément à la figure 2D puis on les reconstitue en noyant cette jonction 20 à l'intérieur du corps 4 du segment de courroie 1 par une opération de soudure à chaud sous pression dans une presse adaptée, sans apport de matière additionnelle. On peut également envisager l'ajout d'une matière thermoplastique additionnelle qui va polymériser à celle du corps 4 du segment de courroie 1. Dans ce cas, on peut s'affranchir d'utiliser une presse. Tout autre procédé d'assemblage intime équivalent peut bien entendu convenir, telle que le collage, d'autre type de soudure, le sertissage, etc. selon la nature du segment de courroie et celle des embouts de couplage.

A la cinquième étape représentée à la figure 2F, et après polymérisation de la matière formant le corps 4 du segment de courroie 1, on sépare les deux extrémités 2 et 3 soudées du tronçon de courroie 1, en effectuant une découpe périphérique du corps 4 dans le plan de jonction P des deux embouts 21 et 22, c'est à dire au droit de l'épaulement 26, dont le positionnement précis aura été préalablement repéré et positionné dans un gabarit.

A l'issue de cette étape, on obtient une courroie 10 selon les figures 4A et 4B fermée en boucle par la jonction 20 qui peut être ouverte très facilement par dévissage de la pièce de liaison 23.

Bien entendu, le mode opératoire du procédé de fabrication ainsi que l'ordre des différentes étapes qui viennent d'être décrites peuvent différer selon le type de jonction à intégrer, les outils disponibles, etc. Par exemple, si l'on utilise une jonction sans âme de liaison 29, l'étape de la figure 2B consistant à ouvrir axialement les extrémités 2, 3 du segment de courroie 1 n'est pas nécessaire. De même, l'étape de la figure 2E consistant à solidariser la jonction au corps 4 du segment de courroie 1 par une opération de thermosoudure ou similaire peut être réalisée sur chaque extrémité indépendante, sans assemblage préalable de la jonction. Dans ce cas, il faut protéger les embouts 21, 22 contre une entrée de matière accidentelle. De fait, l'étape de la figure 2F consistant à faire une découpe périphérique n'est pas nécessaire. Néanmoins, la solution illustrée est préconisée pour obtenir une finition optimale des extrémités de la courroie.

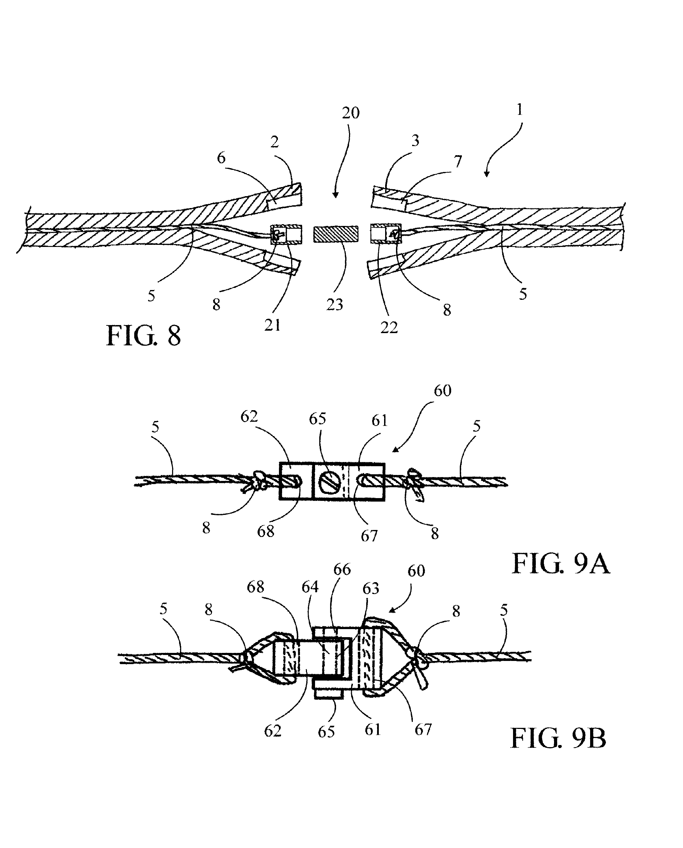

On peut également utiliser des embouts de couplage 21, 22 qui sont agencés pour être fixés directement aux extrémités correspondantes de l'âme de renfort centrale 5 du segment de courroie 1 comme représenté à la figure 8. Dans ce cas, on ajoute une étape audit procédé dans laquelle on dénude en partie ladite âme de renfort centrale 5 sur une longueur prédéterminée pour pouvoir lier axialement chaque extrémité de cette âme de renfort centrale 5 à chacun des embouts de couplage 21, 22 par exemple au moyen d'un noeud 8, d'un point de soudure, d'un rivet, ou de tout autre moyen équivalent. Cette variante de réalisation remplace l'âme de liaison 29 décrite dans l'exemple précédent, et permet de remplir les mêmes fonctions pour obtenir les mêmes résultats de résistance mécanique à la traction et à la fatigue.

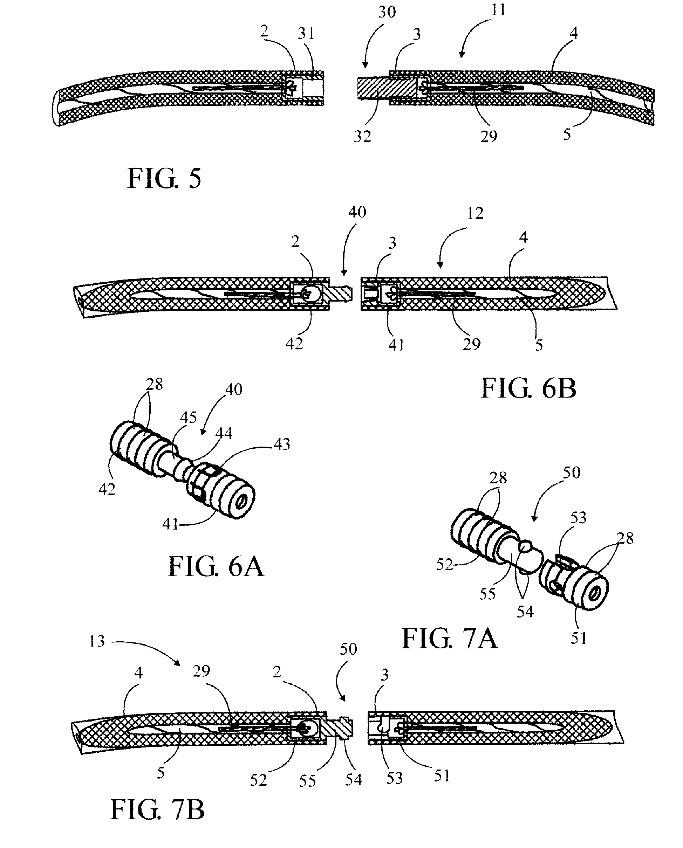

Bien entendu, l'invention n'est pas limitée à la jonction 20 illustrée dans les figures 2 à 4 mais s'étend à toute autre jonction équivalente, réversible ou non. A titre d'exemple, les figures 5 à 7 et 9 illustrent quatre autres variantes de réalisation de jonction.

La figure 5 montre une courroie 11 équipée d'une jonction 30 à visser comportant un premier embout femelle 31 et un second embout mâle 32 complémentaire. L'embout femelle 31 comporte un taraudage tandis que l'embout mâle 32 comporte un filetage complémentaire agencé pour se visser dans le taraudage par rotation d'une extrémité 3 de la courroie 11 par rapport à l'autre extrémité 2. Cette jonction 30 n'est possible que si la courroie 11 est suffisamment longue et flexible pour autoriser le vrillage d'au moins une partie de la courroie 11. Ce vrillage ou cette précontrainte peut être provoqué avant assemblage pour faciliter l'opération de vissage de la jonction 30 et aboutir en fin d'assemblage à une courroie 11 fermée, stabilisée, sans partie vrillée, ni précontrainte. Le nombre de filets des embouts peut être réduit pour assurer un couplage des extrémités 2 et 3 de la courroie 11 en un nombre de tours limité, par exemple en un ou deux tours. L'embout mâle 32 peut être réalisé d'une seule pièce ou de deux pièces à partir d'un embout mâle que l'on rapporte dans un embout femelle. Cette jonction 30 est réversible et ne nécessite pas d'outillage.

On peut également imaginer une jonction à visser pourvue de deux embouts femelles taraudés dans le même sens assemblés par une pièce de liaison pourvue de deux embouts mâles filetés dans le même sens. La pièce de liaison est d'abord vissée dans un des embouts femelles d'une première extrémité du segment de courroie, avant d'être vissée dans l'autre embout femelle de la deuxième extrémité.

Les figures 6A et 6B illustrent une courroie 12 équipée d'une jonction 40 à clipper comportant un premier embout femelle 41 et un second embout mâle 42 complémentaire. L'embout femelle 41 comporte une ou plusieurs languettes élastiques 43 qui font saillie dans son alésage intérieur, tandis que l'embout mâle 42 comporte sur sa périphérie extérieure un ou plusieurs crans d'arrêt 44 complémentaires pour coopérer avec lesdites languettes élastiques 43 lorsque l'embout mâle 42 est introduit dans l'embout femelle 41 et verrouiller automatiquement la jonction 40 en position fermée sans outillage. Dans l'exemple représenté, l'embout mâle 42 comporte un téton 45 s'étendant axialement terminé par une tête tronconique formant un cran d'arrêt 44 annulaire, tandis que l'embout femelle 41 comporte en périphérie quatre languettes élastiques 43 équidistantes. Cette jonction 40 peut être irréversible ou réversible si les languettes élastiques 43 peuvent être déformées pour libérer l'embout mâle 42 de l'embout femelle 41 par un appui extérieur sur le corps 4 de la courroie 11.

Les figures 7A et 7B illustrent une courroie 13 équipée d'une jonction 50 à baïonnette comportant un premier embout femelle 51 et un second embout mâle 52 complémentaire. L'embout femelle 51 comporte une ou plusieurs rainures en L 53 communicant avec son alésage intérieur, tandis que l'embout mâle 52 comporte sur sa périphérie extérieure un ou plusieurs tétons radiaux 54 complémentaires pour coopérer avec lesdites rainures en L 53 lorsque l'embout mâle 52 est introduit dans l'embout femelle 51 et verrouiller automatiquement la jonction 50 en position fermée sans outillage par déplacement angulaire relatif entre les deux extrémités 2 et 3 de la courroie 13, à la manière d'une douille à baïonnette. Dans l'exemple représenté, l'embout mâle 52 comporte un téton 55 s'étendant axialement pourvu de deux tétons radiaux 54 diamétralement opposés, tandis que l'embout femelle 51 comporte en correspondance deux rainures en L 53. Cette jonction 50 est réversible sans outillage.

Les figures 9A et 9B illustrent une jonction 60 à pivot comportant un premier embout femelle 61 formant une chape et un second embout mâle 62 pourvu d'un alésage 63 pour recevoir un axe transversal 64. L'axe transversal 64 comporte une tête 65 par exemple pourvue d'une empreinte de tournevis, et une extrémité filetée. L'embout femelle 61 en forme de chape comporte un alésage 66 traversant au travers duquel est introduit l'axe transversal 64 pour être vissé dans un des alésages 66 taraudé. On obtient ainsi une jonction 60 pivotante du type charnière qui a l'avantage d'assouplir la jonction au passage des poulies. Les embouts femelle 61 et mâle 62 comportent chacun un oeillet 67 et 68 dans lequel est enfilée l'extrémité correspondante de l'âme de renfort centrale 5 à laquelle ils sont fixés par un noeud 8 ou similaire. Cette jonction est réversible au moyen d'un tournevis par exemple.

### Possibilités d'application industrielle :

Le procédé de fabrication selon l'invention s'applique facilement à différents types de courroies de section circulaire ou polygonale, de toute matière et de toute structure. Elles sont généralement réalisées dans des matières thermoplastiques donc thermo-soudables, telles que du polyuréthane, polyéthylène, polyester, etc. Les jonctions peuvent être réalisées dans des matières compatibles avec la matière de la courroie pour faciliter la reconstitution des extrémités de la courroie par thermosoudure, telles qu'un acier inoxydable ou une matière composite, notamment si la ligne de fabrication que la courroie doit équiper comporte des détecteurs de métaux, ce qui est fréquemment le cas dans l'industrie alimentaire.

Il ressort clairement de cette description que l'invention permet d'atteindre les buts fixés. La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Procédé de fabrication d'une courroie (10-13) de section circulaire ou similaire, fermée en boucle au moyen d'une jonction (20, 30, 40, 50) qui couple entre elles les deux extrémités (2, 3) d'un segment de courroie (1), procédé dans lequel on utilise un segment de courroie (1) à la longueur de la courroie à fabriquer, on ménage dans chacune des deux extrémités (2, 3) dudit segment de courroie (1) respectivement un premier évidement central (6) et un second évidement central (7) par enlèvement de matière, on ouvre axialement les extrémités (2, 3) dudit segment de courroie (1) sur une longueur définie, on place dans ledit premier évidement central (6) un premier embout de couplage (21, 31, 41, 51, 61) et dans ledit second évidement central (7) un second embout de couplage (22, 32, 42, 52, 62), on lie axialement lesdits embouts de couplage (21, 22 ; 31,32 ; 41,42 ; 51,52 ; 61,62) au segment de courroie (1), on assemble intimement lesdits embouts de couplage (21, 22 ; 31,32 ; 41,42 ; 51,52 ; 61,62) auxdites extrémités (2, 3) du segment de courroie (1), et on effectue une jonction des extrémités (2, 3) dudit segment de courroie (1) pour former ladite courroie fermée en boucle en accouplant ledit premier et ledit second embouts de couplage.

2. Procédé selon la revendication 1, dans lequel on utilise des embouts de couplage prolongés par une âme de liaison (29), et lorsqu'on place lesdits embouts de couplage dans lesdits évidements centraux (6, 7), on positionne ladite âme de liaison (29) dans l'épaisseur dudit segment de courroie (1) et dans le prolongement desdits évidements (6, 7) pour réaliser ladite liaison axiale.

3. Procédé selon la revendication 1, dans lequel on dénude au moins en partie une âme de renfort (5) dudit segment de courroie (1), et lorsqu'on place lesdits embouts de couplage dans lesdits évidements centraux (6, 7), on fixe les extrémités respectives de ladite âme de renfort (5) du segment de courroie (1) à chacun desdits embouts de couplage pour réaliser ladite liaison axiale.

4. Procédé selon la revendication 1, dans lequel on assemble par thermosoudure lesdites extrémités (2, 3) dudit segment de courroie (1) pour surmouler lesdits embouts de couplage dans leur évidement respectif (6, 7) et réaliser ledit assemblage intime.

5. Procédé selon la revendication 1, dans lequel, préalablement à l'étape d'assemblage intime desdits embouts de couplage aux extrémités (2, 3) dudit segment de courroie (1), on assemble lesdits embouts de couplage (21, 22 ; 31,32 ; 41,42 ; 51,52) pour coupler entre elles lesdites extrémités (2, 3), puis postérieurement à l'étape d'assemblage intime, on procède à une découpe périphérique dudit segment de courroie (1) au droit du plan de jonction (P) desdits embouts de couplage pour ouvrir ladite jonction et séparer lesdites extrémités (2, 3).

6. Procédé selon l'une quelconque des revendications précédentes, dans lequel on utilise des jonctions (20, 30, 40, 50, 60) réversibles.

7. Courroie (10-13) de section circulaire ou similaire, fermée en boucle par une jonction (20, 30, 40, 50), comportant, à l'intérieur de chacune de ses deux extrémités (2, 3), un premier embout de couplage (21, 31, 41, 51, 61) inséré dans un premier évidement central (6) et un second embout de couplage (22, 32, 42, 52, 62) inséré dans un second évidement central (7), ledit premier embout de couplage et ledit second embout de couplage étant agencés pour coupler entre elles lesdites extrémités (2, 3) et fermer ladite courroie en boucle, **caractérisée en ce qu'**elle est obtenue par le procédé de fabrication selon l'une quelconque des revendications précédentes et **en ce que** lesdits embouts de couplage (21, 22 ; 31, 32 ; 41, 42 ; 51, 52 ; 61,62) sont d'une part liés axialement à ladite courroie et d'autre part assemblés intimement auxdites extrémités.

8. Courroie selon la revendication 7, **caractérisée en ce que** lesdits embouts de couplage sont prolongés par une âme de liaison (29) positionnée dans l'épaisseur de ladite courroie et dans le prolongement desdits évidements centraux (6, 7) pour assurer ladite liaison axiale.

9. Courroie selon la revendication 7, **caractérisée en ce que** lesdits embouts de couplage sont fixés à une âme de renfort (5) de ladite courroie pour assurer ladite liaison axiale.

10. Courroie (10) selon la revendication 7, **caractérisée en ce que** ladite jonction (20) est à visser et **en ce qu'**elle comporte deux embouts femelles (21, 22) taraudés chacun dans un sens et une pièce de liaison (23) pourvue de deux embouts mâles (24, 25) filetés chacun dans un sens, ladite jonction étant agencée pour coupler entre elles les extrémités (2, 3) de ladite courroie (10) par vissage de ladite pièce de liaison (23) dans lesdits embouts femelles (21, 22).

11. Courroie (11) selon la revendication 7, **caractérisée en ce que** ladite jonction (30) est à visser et **en ce qu'**elle comporte un premier embout femelle (31) taraudé et un second embout mâle (32) fileté complémentaire, ladite jonction étant agencée pour coupler entre elles les extrémités (2, 3) de ladite courroie (11) par vissage desdits embouts (31, 32).

12. Courroie (12) selon la revendication 7, **caractérisée en ce que** ladite jonction (40) est à clipper et **en ce qu'**elle comporte un premier embout femelle (41) pourvu au moins d'une languette élastique (43) et un second embout mâle (42) pourvu au moins d'un cran d'arrêt (44), ladite jonction étant agencée pour coupler entre elles les extrémités (2, 3) de ladite courroie (12) par emboîtement axial desdits embouts (41, 42) jusqu'à leur verrouillage.

13. Courroie (13) selon la revendication 7, **caractérisée en ce que** ladite jonction (50) est à baïonnette et **en ce qu'**elle comporte un premier embout femelle (51) pourvu au moins d'une rainure en L (53) et un second embout mâle (52) pourvu au moins d'un téton radial (54), ladite jonction étant agencée pour coupler entre elles les extrémités de ladite courroie (13) par emboîtement axial suivi d'un déplacement angulaire desdits embouts (51, 52).

14. Courroie selon la revendication 7, **caractérisée en ce que** ladite jonction (60) est à pivot et **en ce qu'**elle comporte un premier embout femelle (61) formant une chape et un second embout mâle (62) pourvu d'un alésage (63) pour recevoir un axe transversal (64) fixé à ladite chape, ladite jonction étant agencée pour coupler entre elles les extrémités de ladite courroie par emboîtement axial desdits embouts et fixation dudit axe transversal (64).

15. Courroie selon l'une quelconque des revendications 7 à 14, **caractérisée en ce que** ladite jonction (20, 30, 40, 50, 60) est réversible.
